# EUROPEAN PATENT SPECIFICATION

(11) **EP 2 251 219 B1**
(45) Date of publication and mention of the grant of the patent: **22.08.2012**
(21) Application number: 10161355.2
(22) Date of filing: 28.04.2010
(51) Int. Cl.: B60H 1/24, B60H 1/00

(54) **Windshield defogging system for a vehicle**
Beschlagverminderungsvorrichtung einer Windschutzscheibe für ein Kraftfahrzeug
Dispositif pour désembuer le pare-brise d'un véhicule

(30) Priority: 11.05.2009 US 463706
(43) Date of publication of application: 17.11.2010
(73) Proprietor: DEERE & COMPANY, Moline, Illinois 61265-8098 (US)
(72) Inventor: Bruss, Paul T, Cedar Falls, IA 50613 (US); Rush, Randy C., Waterloo, IA 50701 (US)
(74) Representative: Dehnhardt, Florian Christopher

(56) References cited:
- FR-A1- 2 300 690
- US-A- 3 656 423
- US-A- 4 721 031
- US-A1- 2003 173 056
- US-A1- 2007 044 492

## Description

The present invention relates to a windshield defogging system for a vehicle.

Vehicles with closed cabs temporarily have problems due to windshield fogging. This is caused by a natural build up of humidity from respiration which condenses on cold glass surfaces. Typically, this fog (which may also freeze) is removed from the windshield using air that has been conditioned to be dryer and warmer than the air in the cabin. In most applications, this air is directed to the inner surface of the windshield through a duct or plenum with louvered opening. Some current production tractors have Heating, Ventilation and Air Conditioning (HVAC) systems located in the roof of the cab, US 2007/0044492 discloses such a system, upon which the preamble of appending claim 1 is based. In such tractors, the conditioned air is directed downward and at the inner surface of the windshield at a certain angle. Because of this angle and because warm air tends to rise, the conditioned air can bounce off the windshield. This results in small cleared spots which then grow in size, and can result in the bottom portion of the windshield remaining fogged. Thus it is desired to improve the speed and thoroughness of clearing the windshield of fog and/or frost.

Accordingly, an object of this invention is to provide an improved windshield defogging system for a vehicle for clearing a windshield.

This and other objects are achieved by the present invention, wherein a windshield defogging system for a vehicle comprises a windshield attached to a roof assembly. An outer roof member and an inner roof member form a plenum for conducting conditioned air therethrough. A glass mounting panel encloses a laterally and vertically extending front panel member, and a laterally and horizontally extending bottom panel member. The front and bottom panel members are integrally joined together at a corner. The corner has a plurality of apertures formed therein. An adhesive strip attaches an upper edge of the windshield to the front panel member. The plurality of apertures is positioned below the adhesive strip. The apertures receive the conditioned air from the plenum and form an airflow boundary layer which flows over an inner surface of the windshield. The such provided laminar airflow ensures fast and thorough clearing the windshield of fog and/or frost.

For a complete understanding of the objects, techniques, and structure of the invention reference should be made to the following detailed description and accompanying

drawings, wherein similar components are designated by identical reference numerals:
- Fig. 1: is a cross sectional view of a windshield defogging system according to the in- vention; and
- Fig. 2: is a perspective view of the windshield defogging system according to Fig. 1.

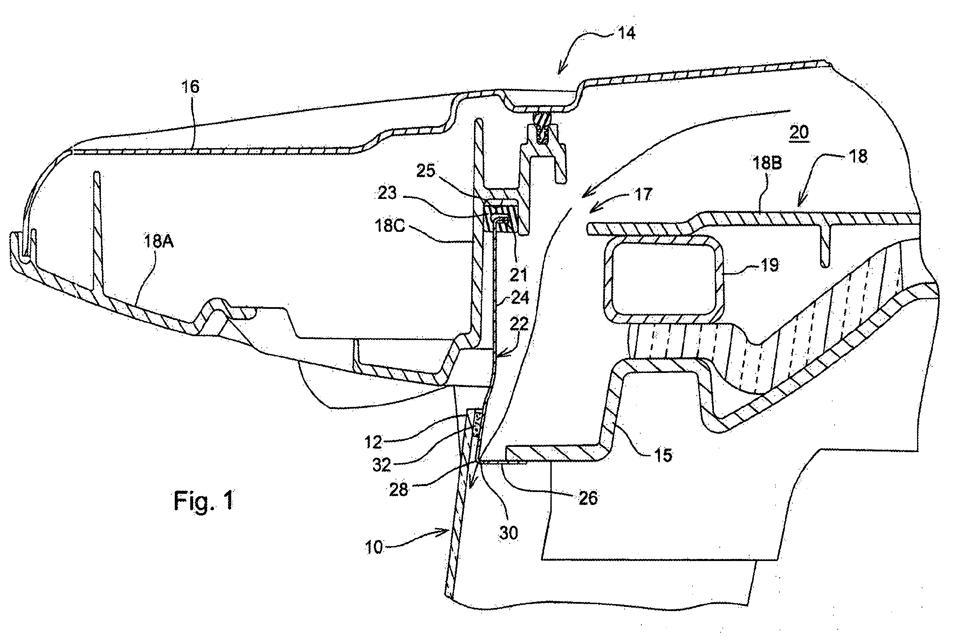

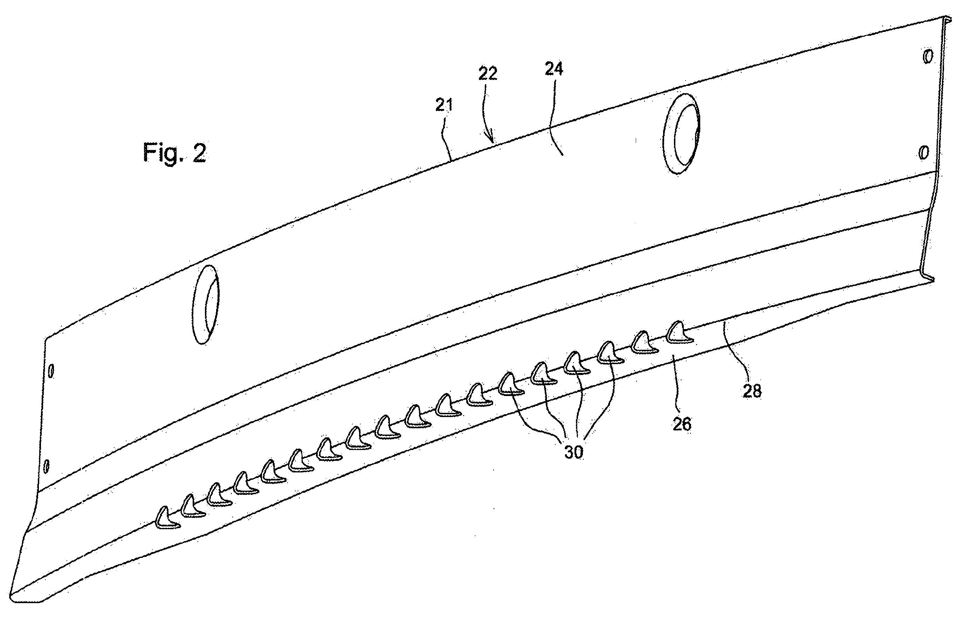

Referring to Figs. 1 and 2, a windshield defogging system for a vehicle according to the invention is shown. An upper edge 12 of a windshield 10 is attached to a roof assembly 14. The roof assembly 14 comprises a headliner 15, an outer roof member 16, an inner roof member 18 and a tubular frame member 19. Inner roof member 18 has an outer portion 18A, an inner portion 18B and a wall portion 18C arranged therebetween. Outer roof member 16 and inner portion 18B enclose a duct or plenum 20 through which flows conditioned air. Conditioned air then flows though a gap 17 in the inner portion 18B towards an upper portion of the windshield 10. The pressurized plenum 20 is sealed to avoid loss of pressure everywhere except where air is desired to flow.

According to the present invention, the roof assembly 14 also comprises a glass mounting panel 22 which has a generally L-shaped cross sectional shape. The glass mounting panel 22 encloses a laterally and vertically extending front panel member 24, and a laterally and horizontally extending bottom panel member 26. The front and bottom panel members 24 and 26 are integrally joined together at a corner 28. A plurality of apertures 30 is formed in the corner 28. An edge of the bottom panel member 26 is fixed to a front edge of the headliner 15. An adhesive strip 32 attaches an upper edge of the windshield 10 to a lower portion of the front panel member 24 close to, but above the apertures 30 and the corner 28. An upper edge 21 of the glass mounting panel 22 is received within a seal 23 which is held in a groove 25 formed by the wall portion 18C.

The apertures 30 form a defog outlet in the glass mounting panel 22 to which the windshield 10 is adhered. The apertures 30 are cut into the bend or corner 28 in the glass mounting panel 22 so that the pressurized air flows directly against the windshield 10.

With this windshield defogging system, a large area of the windshield 10 is covered by flowing air. As a result, conditioned air flows from plenum 20 through gap 17 and through apertures 30 and then downward along the inner surface of the windshield 10. This flow of air forms an airflow boundary layer which flows over an inner surface of the windshield 10.

## Claims

1. Windshield defogging system for a vehicle, comprising a windshield (10) attached to a roof assembly (14); an outer roof member (16) and an inner roof member (18) forming a plenum (20) for conducting conditioned air therethrough; a glass mounting panel (22) enclosing a laterally and vertically extending front panel member (24), and a laterally and horizontally extending bottom panel member (26), the front and bottom panel members (24, 26) being integrally joined together at a corner (28), **characterized in that** the corner (28) has a plurality of apertures (30) formed therein; and an adhesive strip (32) attaches an upper edge (12) of the windshield (10) to the front panel member (24), the plurality of apertures (30) being positioned below the adhesive strip (32), the apertures (30) receiving the conditioned air from the plenum (20) and forming an airflow boundary layer which flows over an inner surface of the windshield (10).

2. The windshield defogging system according to claim 1, **characterized in that** the glass mounting panel (22) having a generally L-shaped cross sectional shape.

3. The windshield defogging system according to claim 1 or 2, **characterized in that** the roof assembly (14) comprises an outer roof member (16) and an inner roof member (18) forming a gap (17), wherein the conditioned air flows from the plenum (20) through the gap (17) to the plurality of apertures (30).

4. The windshield defogging system according to one of claims 1 to 3, **characterized in that** the roof assembly (14) comprises a headliner (15), wherein an edge of the glass mounting panel (22) is attached to the headliner (15).

5. The windshield defogging system according to one of claims 1 to 4, **characterized in that** the roof assembly (14) comprises a headliner (15), wherein an edge of the bottom panel member (26) is attached to the headliner (15).

## Patentansprüche

1. Windschutzscheibenantibeschlagsystem für ein Fahrzeug mit einer Windschutzscheibe (10), die an einer Dachanordnung (14) angebracht ist, einem äußeren Dachelement (16) und einem inneren Dachelement (18), die einen Luftkasten (20) bilden, um klimatisierte Luft hindurchzuleiten, einer Glasmontageplatte (22), die ein sich seitlich und vertikal erstreckendes vorderes Plattenelement (24) umschließt, und einem sich seitlich und horizontal erstreckenden unteren Plattenelement (26), wobei das vordere und das untere Plattenelement (24, 26) an einer Ecke (28) integral miteinander verbunden sind, **dadurch gekennzeichnet, dass** die Ecke (28) mehrere darin ausgebildete Öffnungen (30) hat und ein Klebestreifen (32) einen oberen Rand (12) der Windschutzscheibe (10) an das vordere Plattenelement (24) anbringt, wobei die mehreren Öffnungen (30) unter dem Klebestreifen (32) positioniert sind, wobei die Öffnungen (30) die klimatisierte Luft vom Luftkasten (20) empfangen und eine Luftströmungsgrenzschicht bilden, die über eine innere Fläche der Windschutzscheibe (10) strömt.

2. Windschutzscheibenantibeschlagsystem nach Anspruch 1, **dadurch gekennzeichnet, dass** die Glasmontageplatte (22) im Querschnitt allgemein L-förmig ist.

3. Windschutzscheibenantibeschlagsystem nach Anspruch 1 oder 2, **dadurch gekennzeichnet, dass** die Dachanordnung (14) ein äußeres Dachelement (16) und ein inneres Dachelement (18) umfasst, das einen Spalt (17) bildet, wobei die klimatisierte Luft vom Luftkasten (20) durch den Spalt (17) zu den mehreren Öffnungen (30) strömt.

4. Windschutzscheibenantibeschlagsystem nach einem der Ansprüche 1 bis 3, **dadurch gekennzeichnet, dass** die Dachanordnung (14) eine Dachverkleidung (15) umfasst, wobei ein Rand der Glasmontageplatte (22) an der Dachverkleidung (15) angebracht ist.

5. Windschutzscheibenantibeschlagsystem nach einem der Ansprüche 1 bis 4, **dadurch gekennzeichnet, dass** die Dachanordnung (14) eine Dachverkleidung (15) umfasst, wobei ein Rand des unteren Plattenelements (26) an der Dachverkleidung (15) angebracht ist.

## Revendications

1. Système de désembuage de pare-brise pour un véhicule, comprenant un pare-brise (10) attaché à un ensemble de toit (14) ; un organe de toit extérieur (16) et un organe de toit intérieur (18) formant un plénum (20) pour conduire de l'air climatisé à travers ce dernier ; un panneau de montage de verre (22) incluant un organe de panneau avant (24) s'étendant latéralement et verticalement, et un organe de panneau inférieur (26) s'étendant latéralement et horizontalement, les organes de panneau avant et inférieur (24, 26) étant reliés l'un à l'autre d'un seul tenant au niveau d'un coin (28), **caractérisé en ce que** le coin (28) possède une pluralité d'ouvertures (30) formées dans ce dernier ; et une bande adhésive (32) attache un bord supérieur (12) du pare-brise (10) à l'organe de panneau avant (24), la pluralité d'ouvertures (30) étant positionnée en dessous de la bande adhésive (32), les ouvertures (30) recevant l'air climatisé provenant du plénum (20) et formant une couche limite de flux d'air qui s'écoule sur une surface intérieure du pare-brise (10).

2. Système de désembuage de pare-brise selon la revendication 1, **caractérisé en ce que** le panneau de montage de verre (22) présente une forme en section transversale généralement en forme de L.

3. Système de désembuage de pare-brise selon la revendication 1 ou 2, **caractérisé en ce que** l'ensemble de toit (14) comprend un organe de toit extérieur (16) et un organe de toit intérieur (18) formant un espace (17), l'air climatisé s'écoulant à partir du plénum (20) à travers l'espace (17) jusqu'à la pluralité d'ouvertures (30).

4. Système de désembuage de pare-brise selon l'une quelconque des revendications 1 à 3, **caractérisé en ce que** l'ensemble de toit (14) comprend une garniture de toit (15), un bord du panneau de montage de verre (22) étant attaché à la garniture de toit (15).

5. Système de désembuage de pare-brise selon l'une quelconque des revendications 1 à 4, **caractérisé en ce que** l'ensemble de toit (14) comprend une garniture de toit (15), un bord de l'organe de panneau inférieur (26) étant attaché à la garniture de toit (15).
